# EUROPEAN PATENT APPLICATION

(11) **EP 4 782 159 A1**
(43) Date of publication of application: **29.07.2026**
(21) Application number: 24855083.2
(22) Date of filing: 19.07.2024
(51) Int. Cl.: B25J 5/00, H01M 10/04, B65G 47/90

(54) **MATERIAL PICKING AND PLACING APPARATUS**

(30) Priority: 21.09.2023 CN 202322572398 U
(71) Applicant: Wuxi Lead Intelligent Equipment Co., Ltd., Wuxi, Jiangsu 214028 (CN)
(72) Inventor: SHANG, Wan, Wuxi, Jiangsu 214028 (CN); KOU, Qingming, Wuxi, Jiangsu 214028 (CN); WANG, He, Wuxi, Jiangsu 214028 (CN)
(74) Representative: Rau, Schneck & Hübner Patentanwälte Rechtsanwälte PartGmbB
(86) International application number: PCT/CN2024/106529
(87) International publication number: WO 2025/060652

(57) **Abstract**

Disclosed is a material retrieving and placing device. The material retrieving and placing device comprises a fixture mechanism and a gripper mechanism. The fixture mechanism comprises a pallet and a first restraining assembly. The first restraining assembly may have the material located on the pallet restrained to the pallet so as to be in a restraint state, the first restraining assembly may disengage from the material and be located around a periphery of the material so as to be in an avoidance state; the gripper mechanism comprises a gripper assembly and a second restraining assembly arranged on the gripper assembly, and the gripper assembly has a bearing state and a separation state; in the bearing state, the gripper assembly bears the material, and in the separation state, the gripper assembly disengages from the material and is located around the periphery of the material; the second restraining assembly may restrain the material to the gripper assembly so as to be in a restraint state; in the avoidance state, the second restraining assembly disengages from the material, and the gripper assembly may switch from the bearing state to the separation state; the first restraining assembly and the second restraining assembly may be simultaneously in the restraint state. (FIG. 1)

## Description

### CROSS-REFERENCE TO RELATED APPLICATIONS

The present disclosure claims priority to a Chinese patent application No. 202322572398.3 filed with the CNIPA on September 21, 2023 and entitled "MATERIAL RETRIEVING AND PLACING DEVICE", which is hereby incorporated by reference in its entirety.

### TECHNICAL FIELD

The present disclosure relates to a material retrieving and placing device.

### BACKGROUND

Taking the automatic production line of the lithium battery as an example, in the related art, when retrieving and placing the battery cell (especially the laminated battery cell with the diaphragm without glue), the pole piece of the battery cell in an unrestrained state will shift/offset, which influences its alignment, and subsequently impacts the yield of the subsequent detection equipment, leading to lower production efficiency.

### SUMMARY

The present disclosure provides a material retrieving and placing device, which intends to prevent the material in a stacked structure from shifting/offsetting in a process of retrieving and placing the material.

The present disclosure provides a material retrieving and placing device, including:
a fixture mechanism including a pallet and a first restraining assembly arranged around a periphery of the pallet, wherein the pallet is used for bearing a material, and the first restraining assembly has a first restraint state and a first avoidance state; in the first restraint state, the first restraining assembly has the material located on the pallet restrained to the pallet, and in the first avoidance state, the first restraining assembly disengages from the material and is located around a periphery of the material, thereby releasing restraint on the material from the first restraining assembly; and
a gripper mechanism including a gripper assembly and a second restraining assembly arranged on the gripper assembly, wherein the gripper assembly is used for retrieving and placing the material on the pallet, and has a bearing state and a separation state; in the bearing state, the gripper assembly bears the material, and in the separation state, the gripper assembly disengages from the material and is located around the periphery of the material, thereby releasing bearing of the material by the gripper assembly; the second restraining assembly has a second restraint state and a second avoidance state; in the second restraint state, the second restraining assembly has the material located on the gripper assembly restrained to the gripper assembly, and in the second avoidance state, the second restraining assembly disengages from the material, thereby releasing restraint on the material from the second restraining assembly, and to enable the gripper assembly to switch from the bearing state to the separation state;
wherein the second restraining assembly is capable of being in the second restraint state while the first restraining assembly is in the first restraint state.

In an embodiment, the first restraining assembly includes a first pressing member and a second pressing member, which are respectively located on two sides of the pallet in a first direction, and are both capable of reciprocating in the first direction and in a height direction, thereby enabling the first restraining assembly to switch between the first restraint state and the first avoidance state.

In an embodiment, the first restraining assembly further includes a first horizontal cylinder, a second horizontal cylinder, a first height cylinder, and a second height cylinder, the first horizontal cylinder and the second horizontal cylinder are respectively located on the two sides of the pallet in the first direction, the first height cylinder and the second height cylinder are respectively arranged on the first horizontal cylinder and the second horizontal cylinder, the first pressing member and the second pressing member are respectively arranged on the first height cylinder and the second height cylinder, the first horizontal cylinder and the second horizontal cylinder are respectively capable of driving the first pressing member and the second pressing member to reciprocate in the first direction, and the first height cylinder and the second height cylinder are respectively capable of driving the first pressing member and the second pressing member to reciprocate in the height direction.

In an embodiment, the gripper assembly includes a first gripper and a second gripper, which are arranged spaced apart in a second direction, and are both capable of reciprocating in the second direction, thereby enabling the gripper assembly to switch between the bearing state and the separation state;
the second restraining assembly includes a third pressing member and a fourth pressing member, which are respectively arranged on the first gripper and the second gripper, and are both capable of reciprocating in the height direction, thereby enabling the second restraining assembly to switch between the second restraint state and the second avoidance state;
wherein the first direction, the second direction and the height direction are perpendicular to each other.

In an embodiment, the second restraining assembly further includes a third height cylinder and a fourth height cylinder which are respectively arranged on the first gripper and the second gripper, the third pressing member and the fourth pressing member are respectively arranged on the third height cylinder and the fourth height cylinder, and the third height cylinder and the fourth height cylinder are respectively capable of driving the third pressing member and the fourth pressing member to reciprocate in the height direction.

In an embodiment, the gripper assembly further includes a first vertical plate and a second vertical plate which are both capable of reciprocating in the second direction, the third pressing member is located between the first vertical plate and the second vertical plate and is arranged on the first vertical plate, the first gripper is floatingly arranged on a side of the first vertical plate away from the third pressing member to enable floating in the height direction, the fourth pressing member is located between the first vertical plate and the second vertical plate and is arranged on the second vertical plate, and the second gripper is floatingly arranged on a side of the second vertical plate away from the fourth pressing member to enable floating in the height direction.

In an embodiment, the gripper assembly further includes a gripper cylinder on which both the first gripper and the second gripper are arranged, and the gripper cylinder is capable of driving the first gripper and the second gripper to perform opening and closing movements in the second direction.

In an embodiment, the gripper assembly further includes a first connecting plate, a second connecting plate, a first vertical plate, a second vertical plate, a first floating plate, and a second floating plate;
the first connecting plate and the second connecting plate are respectively connected to the gripper cylinder, and the gripper cylinder is capable of driving the first connecting plate and the second connecting plate to perform opening and closing movements in the second direction;
the first vertical plate and the second vertical plate are respectively arranged on the first connecting plate and the second connecting plate;
the third pressing member is located between the first vertical plate and the second vertical plate and is arranged on the first vertical plate, the first gripper is arranged on a side of the first vertical plate away from the third pressing member by the first floating plate to enable floating in the height direction, the fourth pressing member is located between the first vertical plate and the second vertical plate and is arranged on the second vertical plate, and the second gripper is arranged on a side of the second vertical plate away from the fourth pressing member by the second floating plate to enable floating in the height direction.

In an embodiment, the gripper assembly includes a first gripper and a second gripper, which are arranged spaced apart in a second direction, and are both capable of reciprocating in the second direction, thereby enabling the gripper assembly to switch between the bearing state and the separation state;
the second restraining assembly includes a third pressing member and a fourth pressing member, which are respectively arranged on the first gripper and the second gripper, and are both capable of reciprocating in the height direction, thereby enabling the second restraining assembly to switch between the second restraint state and the second avoidance state.

In an embodiment, the gripper mechanism further includes a driving assembly on which the gripper assembly is arranged, and the driving assembly is capable of driving the gripper assembly to reciprocate in the height direction.

When using the above material retrieving and placing device to retrieve the material, first, the material can be placed on the pallet and restrained by the first restraining assembly onto the pallet; then, the gripper assembly of the gripper mechanism can be controlled to bear the material on the pallet, and the material located on the gripper assembly can be restrained by the second restraining assembly onto the gripper assembly, at which point the material is simultaneously restrained by both the first restraining assembly and the second restraining assembly; next, the first restraining assembly can be controlled to switch from the first restraint state to the first avoidance state; finally, the gripper mechanism can retrieve the material restrained by the second restraining assembly, thereby completing the process of retrieving the material.

When using the above material retrieving and placing device to place the material, first, the material can be placed on the gripper assembly of the gripper mechanism, and the material located on the gripper assembly can be restrained by the second restraining assembly onto the gripper assembly; then, the material on the gripper assembly can be placed on the pallet, and the material can be restrained by the first restraining assembly onto the pallet; next, the second restraining assembly can be controlled to switch from the second restraint state to the second avoidance state; finally, the gripper assembly can switch from the bearing state to the separation state, thereby completing the process of placing the material.

In the above processes of retrieving and placing the material, the material is always restrained by the first restraining assembly and/or the second restraining assembly. That is, during the processes of retrieving and placing the material, the material remains in a restrained state, thus avoiding the problem where the material, if left in an unrestrained state, experiences shifting/offsetting between layers of the stacked structure of the material, influencing the alignment between layers of the material, and subsequently impacting the yield of the subsequent detection equipment, leading to lower production efficiency.

### BRIEF DESCRIPTION OF THE DRAWINGS

FIG. 1 is a side view of a material retrieving and placing device according to an embodiment of the present disclosure;
FIG. 2 is a front view of a fixture mechanism of the material retrieving and placing device shown in FIG. 1;
FIG. 3 is a front view of a gripper mechanism of the material retrieving and placing device shown in FIG. 1.

### DETAILED DESCRIPTION

To facilitate an understanding of the present disclosure, reference will now be made to the accompanying drawings, in which the present disclosure is more fully described, and preferred embodiments of the present disclosure are illustrated. However, the present disclosure may be embodied in many different forms and is not limited to the embodiments described herein. Rather, these embodiments are provided so that the disclosure of the present disclosure can be more thoroughly and comprehensively understood.

It should be noted that when an element is referred to as being "fixed to" another element, it can be directly fixed onto the other element, or there may be an intervening element therebetween. When an element is referred to as being "connected" to another element, it can be directly connected to the other element or intervening elements may also be present. Terms such as "vertical", "horizontal", "left", "right" and similar expressions used herein are for illustration purposes only.

Unless otherwise defined, all technical and scientific terms used herein have the same meaning as commonly understood by one of ordinary skill in the art to which the present disclosure pertains. The terminology used in the description of the present disclosure is for the purpose of describing particular embodiments only and is not intended to limit the present disclosure. The term "and/or" used herein includes any and all combinations of one or more of the associated listed items.

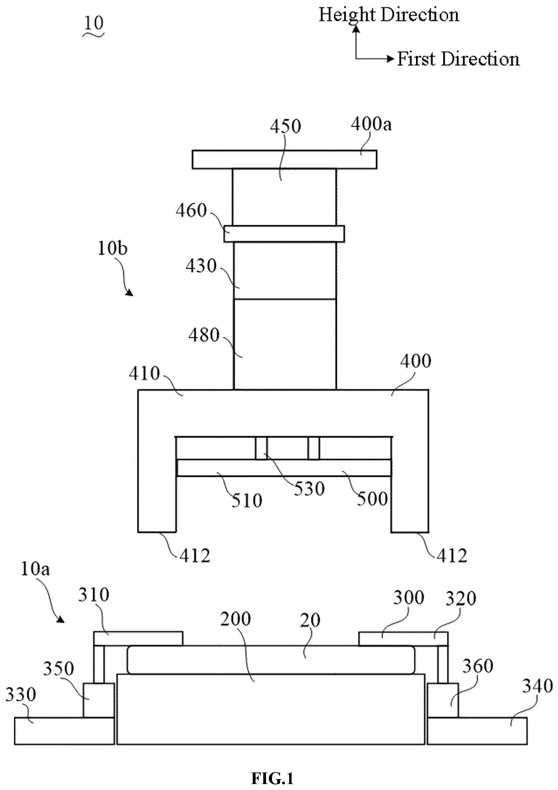

As shown in FIGS. 1 to 3, an embodiment of the present disclosure provides a material retrieving and placing device 10, which includes a fixture mechanism 10a and a gripper mechanism 10b.

The fixture mechanism 10a includes a pallet 200 and a first restraining assembly 300 arranged on the periphery of the pallet 200. The pallet 200 is used for bearing the material 20. The first restraining assembly 300 has a first restraint state and a first avoidance state. In the first restraint state, the first restraining assembly 300 restrains the material 20 on the pallet 200 to the pallet 200. That is, in the first restraint state, the first restraining assembly 300 prevents the material 20 from being retrieved from the pallet 200. In the first avoidance state, the first restraining assembly 300 disengages from the material 20 and is located around the periphery of the material 20, thereby releasing the restraint on the material 20 from the first restraining assembly 300. That is, in the first avoidance state, the first restraining assembly 300 does not prevent the material 20 from being retrieved from the pallet 200.

The gripper mechanism 10b includes a gripper assembly 400 and a second restraining assembly 500 arranged on the gripper assembly 400. The gripper assembly 400 is used for retrieving and placing the material 20 from and onto the pallet 200. The gripper assembly 400 has a bearing state and a separation state. In the bearing state, the gripper assembly 400 bears the material 20. In the separation state, the gripper assembly 400 disengages from the material 20 and is located around the periphery of the material 20, thereby releasing the gripper assembly 400 from bearing the material 20. The second restraining assembly 500 has a second restraint state and a second avoidance state. In the second restraint state, the second restraining assembly 500 restrains the material 20 located on the gripper assembly 400 to the gripper assembly 400. In the second avoidance state, the second restraining assembly 500 disengages from the material 20 thereby releasing the restraint on the material 20 from the second restraining assembly 500, and allowing the gripper assembly 400 to switch from the bearing state to the separation state. Specifically, while the first restraining assembly 300 is in the first restraint state, the second restraining assembly 500 can also be in the second restraint state. That is, when the first restraining assembly 300 switches between the first restraint state and the first avoidance state, it does not interfere with the second restraining assembly 500 when it switches between the second restraint state and the second avoidance state.

When using the above material 20 retrieving and placing device 10 to retrieve the material 20, first, the material 20 may be placed on the pallet 200 and restrained by the first restraining assembly 300 onto the pallet 200; then, the gripper assembly 400 of the gripper mechanism 10b may be controlled to bear the material 20 on the pallet 200, and the material 20 located on the gripper assembly 400 may be restrained by the second restraining assembly 500 onto the gripper assembly 400. At this time, the material 20 is simultaneously restrained by both the first restraining assembly 300 and the second restraining assembly 500; next, the first restraining assembly 300 may be controlled to switch from the first restraint state to the first avoidance state; finally, the gripper mechanism 10b may retrieve the material 20 restrained by the second restraining assembly 500, thereby completing the process of retrieving the material 20.

When using the above material 20 retrieving and placing device 10 to place the material 20, first, the material 20 may be placed on the gripper assembly 400 of the gripper mechanism 10b, and the material 20 located on the gripper assembly 400 may be restrained by the second restraining assembly 500 onto the gripper assembly 400; then, the material 20 on the gripper assembly 400 may be placed on the pallet 200, and the material 20 may be restrained by the first restraining assembly 300 onto the pallet 200; next, the second restraining assembly 500 may be controlled to switch from the second restraint state to the second avoidance state; finally, the gripper assembly 400 may switch from the bearing state to the separation state, thereby completing the process of placing the material 20.

In the above processes of retrieving and placing the material 20, the material 20 is always restrained by the first restraining assembly 300 and/or the second restraining assembly 500. That is, during the processes of retrieving and placing the material 20, the material 20 remains in a restrained state, thus avoiding the problem where material 20, if left in an unrestrained state, experiences shifting/offsetting between layers the stacked structure of the material 20, influencing the alignment between layers of the material 20, and subsequently impacting the yield of the subsequent detection equipment, leading to lower production efficiency.

In the present embodiment, the material 20 is a battery cell. It can be understood that in other embodiments, the material 20 may also be other materials with a stacked structure.

In the present embodiment, the first restraining assembly 300 includes a first pressing member 310 and a second pressing member 320, which are respectively located on two sides of the pallet 200 in a first direction. Both the first pressing member 310 and the second pressing member 320 are capable of reciprocating in the first direction and in the height direction, thereby enabling the first restraining assembly 300 to switch between the first restraint state and the first avoidance state. It should be noted that in the present embodiment, the first pressing member 310 and the second pressing member 320 being capable of reciprocating in the first direction means that the first pressing member 310 may move toward or away from the pallet 200 in the first direction, and the second pressing member 320 can move toward or away from the pallet 200 in the first direction. The first pressing member 310 and the second pressing member 320 being capable of reciprocating in the height direction means that the first pressing member 310 may move toward or away from the pallet 200 in the height direction, and the second pressing member 320 may move toward or away from the pallet 200 in the height direction.

Specifically, the first pressing member 310 and the second pressing member 320 can be controlled to move in the first direction, and both the first pressing member 310 and the second pressing member 320 can be oriented toward the pallet 200, such that the first pressing member 310 and the second pressing member 320 are located above the pallet 200. Then, the first pressing member 310 and the second pressing member 320 can be controlled to move in the height direction, and both the first pressing member 310 and the second pressing member 320 can be oriented toward the pallet 200, such that the first pressing member 310 and the second pressing member 320 respectively presses against the material 20 on the pallet 200, thereby switching the first restraining assembly 300 from the first avoidance state to the first restraint state.

The first pressing member 310 and the second pressing member 320 can be controlled to move in the height direction, and both that first pressing member 310 and the second pressing member 320 can be moved away from the pallet 200, such that the first pressing member 310 and the second pressing member 320 are respectively separated from the material 20 on the pallet 200. Then, the first pressing member 310 and the second pressing member 320 can be moved in the first direction, and both the first pressing member 310 and the second pressing member 320 can be moved away from the pallet 200, such that the first pressing member 310 and the second pressing member 320 are located around the periphery of the pallet 200, thereby switching the first restraining assembly 300 from the first restraint state to the first avoidance state.

Thus, it is very convenient to achieve the first restraint state and the first avoidance state of the first restraining assembly 300. It can be understood that in other embodiments, when the spacing between the first pressing member 310 and the pallet 200 and the spacing between the second pressing member 320 and the pallet 200 are the same as the thickness of the material 20, the first pressing member 310 and second pressing member 320 may not need to reciprocate in the height direction.

In the present embodiment, the first restraining assembly 300 further includes a first horizontal cylinder 330, a second horizontal cylinder 340, a first height cylinder 350, and a second height cylinder 360. The first horizontal cylinder 330 and the second horizontal cylinder 340 are respectively located on two sides of the pallet 200 in the first direction. The first height cylinder 350 and the second height cylinder 360 are respectively arranged on the first horizontal cylinder 330 and the second horizontal cylinder 340. The first pressing member 310 and the second pressing member 320 are respectively arranged on the first height cylinder 350 and the second height cylinder 360. The first horizontal cylinder 330 and the second horizontal cylinder 340 can drive the first pressing member 310 and the second pressing member 320 to reciprocate in a first direction, respectively. The first height cylinder 350 and the second height cylinder 360 can drive the first pressing member 310 and the second pressing member 320 to reciprocate in the height direction, respectively. Specifically, the first horizontal cylinder 330 and the second horizontal cylinder 340 are arranged below, while the first height cylinder 350 and the second height cylinder 360 are arranged above, which contributes to the structural stability of the first restraining assembly 300. It will be appreciated that in other embodiments, the first height cylinder 350 and the second height cylinder 360 may also be arranged below, while the first horizontal cylinder 330 and the second horizontal cylinder 340 may be arranged above, that is, the first horizontal cylinder 330 and the second horizontal cylinder 340 may be arranged on the first height cylinder 350 and the second height cylinder 360 respectively, and the first pressing members 310 and the second pressing members 320 may be arranged on the first horizontal cylinder 330 and the second horizontal cylinder 340, respectively.

In the present embodiment, the gripper assembly 400 includes a first gripper 410 and a second gripper 420. The first gripper 410 and the second gripper 420 are arranged spaced apart in the second direction. Both the first gripper 410 and the second gripper 420 can reciprocate in the second direction to enable the gripper assembly 400 to switch between the bearing state and the separation state. The second restraining assembly 500 includes a third pressing member 510 and a fourth pressing member 520. The third pressing member 510 and the fourth pressing member 520 are respectively arranged on the first gripper 410 and the second gripper 420, and both the third pressing member 510 and the fourth pressing member 520 can reciprocate in the height direction, thereby enabling the second restraining assembly 500 to switch between the second restraint state and the second avoidance state.

Specifically, the first gripper 410 and the second gripper 420 can be controlled to move in the second direction to enable them to orient toward the material 20, such that the first gripper 410 and the second gripper 420 bear the material 20. Then, the third pressing member 510 and the fourth pressing member 520 can be controlled to move in the height direction to orient toward the material 20, such that the third pressing member 510 and the fourth pressing member 520 are respectively pressed against the material 20 located on the first gripper 410 and the second gripper 420, thereby switching the second restraining assembly 500 from the second avoidance state to the second restraint state.

The third pressing member 510 and the fourth pressing member 520 can be controlled to move in the height direction to move away from the material 20, such that the third pressing member 510 and the fourth pressing member 520 are separated from the material 20 located on the first and second grippers 410 and 420, respectively, thereby switching the second restraining assembly 500 from the second restraint state to the second avoidance state. Then, the first gripper 410 and the second gripper 420 can be controlled to move in the second direction to move away from the material 20, such that the first gripper 410 and the second gripper 420 are separated from the material 20 and are located around the periphery of the material 20. At this time, the third pressing member 510 and the fourth pressing member 520 are also located around the periphery of the material 20.

As such, it is very convenient to realize that the second restraining assembly 500 has the second restraint state and the second avoidance state. It will be appreciated that in other embodiments, if the spacing between the third pressing member 510 and the first gripper 410 is the same as the thickness of the material 20, and the spacing between the fourth pressing member 520 and the second gripper 420 is the same as the thickness of the material 20, it is possible that the third pressing member 510 and the fourth pressing member 520 cannot reciprocate in the height direction.

In the present embodiment, the first direction, the second direction, and the height direction are perpendicular to each other, that is, the first direction, the second direction, and the height direction can form a three-dimensional rectangular coordinate system. This makes it very convenient to achieve the second restraining assembly 500 being in the second restraint state while the first restraining assembly 300 is in the first restraint state. It will be appreciated that in other embodiments, it is also possible that both the first gripper 410 and the second gripper 420 can reciprocate in the first direction to enable the gripper assembly 400 to switch between the bearing state and the separation state. In this case, the whole unit formed by the first pressing member 310 and the second pressing member 320 may be arranged in the second direction with respect to the whole unit formed by the first gripper 410 and the second gripper 420.

In the present embodiment, the second restraining assembly 500 further includes a third height cylinder 530 and a fourth height cylinder 540. The third height cylinder 530 and the fourth height cylinder 540 are respectively arranged on the first gripper 410 and the second gripper 420. The third pressing member 510 and the fourth pressing member 520 are respectively arranged on the third height cylinder 530 and the fourth height cylinder 540. The third height cylinder 530 and the fourth height cylinder 540 can respectively drive the third pressing member 510 and the fourth pressing member 520 to reciprocate in the height direction. This makes it very convenient to achieve the second restraining assembly 500 having the second restraint state and the second avoidance state. It will be appreciated that in other embodiments, the third height cylinder 530 and the fourth height cylinder 540 may be replaced by structures such as lead screws.

In the present embodiment, the gripper assembly 400 further includes a first vertical plate 430 and a second vertical plate 440. Both the first vertical plate 430 and the second vertical plate 440 can reciprocate in the second direction. The third pressing member 510 is located between the first vertical plate 430 and the second vertical plate 440, and is arranged on the first vertical plate 430. The first gripper 410 is floatingly arranged on a side of the first vertical plate 430 away from the third pressing member 510, enabling it to float in the height direction. The fourth pressing member 520 is located between the first vertical plate 430 and the second vertical plate 440, and is arranged on the second vertical plate 440. The second gripper 420 is floatingly arranged on a side of the second vertical plate 440 away from the fourth pressing member 520, enabling it to float in the height direction. The ability of the first gripper 410 and the second gripper 420to float in the height direction can cushion the restraining force on the material 20 from the second restraining assembly 500, avoid hard pressing, and better protect the material 20. It will be appreciated that in other embodiments, it is possible that the first gripper 410 and the second gripper 420 cannot float in the height direction. In this case, a cushioning layer can be arranged at an end of the second restraining assembly 500 to avoid hard pressing on the material 20.

In the present embodiment, the gripper assembly 400 further includes a gripper cylinder 450. The first gripper 410 and the second gripper 420 are both arranged on the gripper cylinder 450. The gripper cylinder 450 can drive the first gripper 410 and the second gripper 420 to perform opening and closing movements in the second direction. In this way, it is not only convenient to achieve that both the first gripper 410 and the second gripper 420 can reciprocate in the second direction, but also simplifies the structure of the gripper assembly 400. It will be appreciated that in other embodiments, two gripper cylinders may be provided: a first gripper cylinder connected to the first gripper 410, and a second gripper cylinder connected to the second gripper 420. The first gripper cylinder and the second gripper cylinder can respectively drive the first gripper 410 and the second gripper 420 to reciprocate in the second direction.

In the present embodiment, the gripper assembly 400 further includes a first connecting plate 460, a second connecting plate 470, a first vertical plate 430, a second vertical plate 440, a first floating plate 480 and a second floating plate 490. The first connecting plate 460 and the second connecting plate 470 are respectively connected to the gripper cylinder 450. The gripper cylinder 450 can drive the first connecting plate 460 and the second connecting plate 470 to perform opening and closing movements in the second direction. The first vertical plate 430 and the second vertical plate 440 are respectively arranged on the first connecting plate 460 and the second connecting plate 470. The third pressing member 510 is located between the first vertical plate 430 and the second vertical plate 440, and is arranged on the first vertical plate 430. The first gripper 410 is arranged on a side of the first vertical plate 430 away from the third pressing member 510 by means of the first floating plate 480, enabling it to float in the height direction. The fourth pressing member 520 is located between the first vertical plate 430 and the second vertical plate 440, and is arranged on the second vertical plate 440. The second gripper 420 is arranged on a side of the second vertical plate 440 away from the fourth pressing member 520 by means of the second floating plate 490 , enabling it to float in the height direction. As such, it is very convenient to construct the structure of the above gripper assembly 400.

In the present embodiment, the gripper mechanism 10b further includes a driving assembly. The gripper assembly 400 is arranged on the driving assembly, and the driving assembly can drive the gripper assembly 400 to reciprocate in the height direction. Specifically, in the present embodiment, the gripper assembly 400 further includes a gripper backplate 400a. The gripper assembly 400 is connected to the driving assembly through the gripper backplate 400a. This makes it very convenient for the gripper assembly 400 to approach or move away from the fixture mechanism 10a. It will be appreciated that in other embodiments, when it is not necessary to adjust the positions in the height direction of the gripper assembly 400 and the fixture mechanism 10a, the driving assembly may be omitted.

Specifically, in the present embodiment, when the material retrieving and placing device 10 is used to retrieve the material 20, before the gripper assembly 400 of the gripper mechanism 10b bears the material 20 on the pallet 200, the first gripper 410 and the second gripper 420 can be controlled by the driving assembly to move downward toward to the material 20 in the height direction. The first gripper 410 and the second gripper 420 can be controlled to move in the second direction until the upper surfaces of the first gripper 410 and the second gripper 420 are at least 2 mm from the lower surface of the material 20, so as to enable the first gripper 410 and the second gripper 420 to orient toward the material 20, such that the first gripper 410 and the second gripper 420 may bear the material 20. Then, the first gripper 410 and the second gripper 420 may be controlled by means of the driving assembly to move upward in the height direction, thereby bearing the material 20.

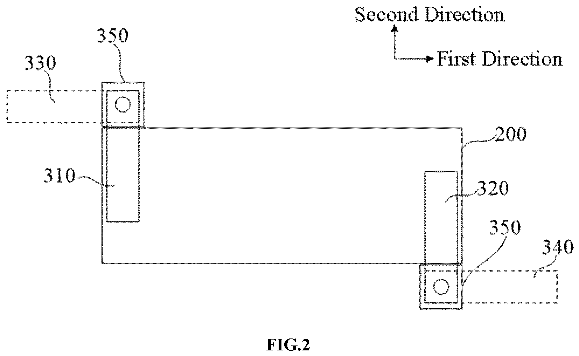

In the present embodiment, as shown in FIG. 2, the first pressing member 310, the first horizontal cylinder 330, and the first height cylinder 350 constitute a first restraining module; and the second pressing member 320, the second horizontal cylinder 340, and the second height cylinder 360 constitute a second restraining module. In the present embodiment, there are provided one first restraining module and one second restraining module. It will be appreciated that in other embodiments, there may be a plurality of first restraining modules which are arranged at intervals in the second direction, and there may also be a plurality of second restraining modules which are arranged at intervals in the second direction.

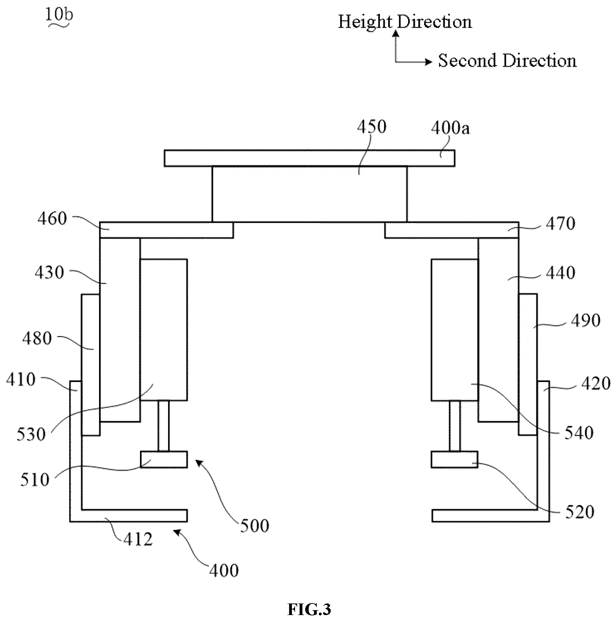

In the present embodiment, as shown in FIGS. 1 and 3, the first gripper 410 and the second gripper 420 each is provided with two gripper portions 412 that arranged spaced apart in the first direction. In this way, it is possible to better bear the material 20. It will be appreciated that in other embodiments, the gripper assembly 400 may further include a plurality of first grippers 410 and a plurality of second grippers 420, wherein the plurality of first grippers 410 are located on one side of the material 20 in the second direction and are arranged at intervals in the first direction, and the plurality of second gripper 420 are located on the other side of the material 20 in the second direction and are arrange at intervals in the first direction. It will be appreciated that in other embodiments, the first gripper 410 and the second gripper 420 may each have only one gripper portion 412.

The above description is merely an optional embodiment of the present disclosure, and is not intended to limit the patent scope of the present disclosure. Any equivalent structural transformations made based on the inventive concept of the present disclosure using the contents of the specification and the accompanying drawings of the present disclosure, or their direct/indirect application in other related technical fields, shall fall within the scope of patent protection of the present disclosure.

## Claims

1. A material retrieving and placing device, comprising:
a fixture mechanism comprising a pallet and a first restraining assembly arranged around a periphery of the pallet, wherein the pallet is used for bearing a material, and the first restraining assembly has a first restraint state and a first avoidance state; in the first restraint state, the first restraining assembly has the material located on the pallet restrained to the pallet, and in the first avoidance state, the first restraining assembly disengages from the material and is located around a periphery of the material, thereby releasing restraint on the material from the first restraining assembly; and
a gripper mechanism comprising a gripper assembly and a second restraining assembly arranged on the gripper assembly, wherein the gripper assembly is used for retrieving and placing the material on the pallet, and has a bearing state and a separation state; in the bearing state, the gripper assembly bears the material, and in the separation state, the gripper assembly disengages from the material and is located around the periphery of the material, thereby releasing bearing of the material by the gripper assembly; the second restraining assembly has a second restraint state and a second avoidance state; in the second restraint state, the second restraining assembly has the material located on the gripper assembly restrained to the gripper assembly, and in the second avoidance state, the second restraining assembly disengages from the material, thereby releasing restraint on the material from the second restraining assembly, and to enable the gripper assembly to switch from the bearing state to the separation state;
wherein the second restraining assembly is capable of being in the second restraint state while the first restraining assembly is in the first restraint state.

2. The material retrieving and placing device of claim 1, wherein the first restraining assembly comprises a first pressing member and a second pressing member, which are respectively located on two sides of the pallet in a first direction, and are both capable of reciprocating in the first direction and in a height direction, thereby enabling the first restraining assembly to switch between the first restraint state and the first avoidance state.

3. The material retrieving and placing device of claim 2, wherein the first restraining assembly further comprises a first horizontal cylinder, a second horizontal cylinder, a first height cylinder, and a second height cylinder, the first horizontal cylinder and the second horizontal cylinder are respectively located on the two sides of the pallet in the first direction, the first height cylinder and the second height cylinder are respectively arranged on the first horizontal cylinder and the second horizontal cylinder, the first pressing member and the second pressing member are respectively arranged on the first height cylinder and the second height cylinder, the first horizontal cylinder and the second horizontal cylinder are respectively capable of driving the first pressing member and the second pressing member to reciprocate in the first direction, and the first height cylinder and the second height cylinder are respectively capable of driving the first pressing member and the second pressing member to reciprocate in the height direction.

4. The material retrieving and placing device of claim 2 or 3, wherein the gripper assembly comprises a first gripper and a second gripper, which are arranged spaced apart in a second direction, and are both capable of reciprocating in the second direction, thereby enabling the gripper assembly to switch between the bearing state and the separation state;
the second restraining assembly comprises a third pressing member and a fourth pressing member, which are respectively arranged on the first gripper and the second gripper, and are both capable of reciprocating in the height direction, thereby enabling the second restraining assembly to switch between the second restraint state and the second avoidance state;
wherein the first direction, the second direction and the height direction are perpendicular to each other.

5. The material retrieving and placing device of claim 4, wherein the second restraining assembly further comprises a third height cylinder and a fourth height cylinder which are respectively arranged on the first gripper and the second gripper, the third pressing member and the fourth pressing member are respectively arranged on the third height cylinder and the fourth height cylinder, and the third height cylinder and the fourth height cylinder are respectively capable of driving the third pressing member and the fourth pressing member to reciprocate in the height direction.

6. The material retrieving and placing device of claim 4 or 5, wherein the gripper assembly further comprises a first vertical plate and a second vertical plate, which are both capable of reciprocating in the second direction, the third pressing member is located between the first vertical plate and the second vertical plate and is arranged on the first vertical plate, the first gripper is floatingly arranged on a side of the first vertical plate away from the third pressing member to enable floating in the height direction, the fourth pressing member is located between the first vertical plate and the second vertical plate and is arranged on the second vertical plate, and the second gripper is floatingly arranged on a side of the second vertical plate away from the fourth pressing member to enable floating in the height direction.

7. The material retrieving and placing device of any one of claims 4 to 6, wherein the gripper assembly further comprises a gripper cylinder on which both the first gripper and the second gripper are arranged, and the gripper cylinder is capable of driving the first gripper and the second gripper to perform opening and closing movements in the second direction.

8. The material retrieving and placing device of claim 7, wherein the gripper assembly further comprises a first connecting plate, a second connecting plate, a first vertical plate, a second vertical plate, a first floating plate, and a second floating plate;
the first connecting plate and the second connecting plate are respectively connected to the gripper cylinder, and the gripper cylinder is capable of driving the first connecting plate and the second connecting plate to perform opening and closing movements in the second direction;
the first vertical plate and the second vertical plate are respectively arranged on the first connecting plate and the second connecting plate;
the third pressing member is located between the first vertical plate and the second vertical plate and is arranged on the first vertical plate, the first gripper is arranged on a side of the first vertical plate away from the third pressing member by the first floating plate to enable floating in the height direction, the fourth pressing member is located between the first vertical plate and the second vertical plate and is arranged on the second vertical plate, and the second gripper is arranged on a side of the second vertical plate away from the fourth pressing member by the second floating plate to enable floating in the height direction.

9. The material retrieving and placing device of any one of claims 1 to 8, wherein the gripper assembly comprises a first gripper and a second gripper, which are arranged spaced apart in a second direction, and are both capable of reciprocating in the second direction, thereby enabling the gripper assembly to switch between the bearing state and the separation state;
the second restraining assembly comprises a third pressing member and a fourth pressing member, which are respectively arranged on the first gripper and the second gripper, and are both capable of reciprocating in the height direction, thereby enabling the second restraining assembly to switch between the second restraint state and the second avoidance state.

10. The material retrieving and placing device of any one of claims 1 to 9, wherein the gripper mechanism further comprises a driving assembly on which the gripper assembly is arranged, and the driving assembly is capable of driving the gripper assembly to reciprocate in the height direction.
